(19) Europäisches Patentamt
European Patent Office
Office européen des brevets

(11) Veröffentlichungsnummer: **0 034 120**
**B1**

(12) # EUROPÄISCHE PATENTSCHRIFT

(45) Veröffentlichungstag der Patentschrift: **14.12.83**

(21) Anmeldenummer: **81810034.9**

(22) Anmeldetag: **06.02.81**

(51) Int. Cl.³: **C 07 C 69/736,** C 07 C 69/712, C 07 C 69/738, C 07 C 67/30, C 07 C 79/43, C 07 C 103/178, C 07 C 103/58, C 07 C 121/75, C 07 C 79/41, C 07 C 59/68, C 07 C 153/07

(54) **Neue Phenoxy-phenoxy-carbonsäurederivate.**

(30) Priorität: **12.02.80 CH 1136/80**

(43) Veröffentlichungstag der Anmeldung: **19.08.81 Patentblatt 81/33**

(45) Bekanntmachung des Hinweises auf die Patenterteilung: **14.12.83 Patentblatt 83/50**

(84) Benannte Vertragsstaaten: **BE CH DE FR GB IT LI NL**

(56) Entgegenhaltungen: **DE - A - 2 417 487**
**DE - A - 2 732 442**

(73) Patentinhaber: **CIBA-GEIGY AG, Patentabteilung Postfach, CH-4002 Basel (CH)**

(72) Erfinder: **Meyer, Willy, Talstrasse 49, CH-4125 Riehen (CH)**
Erfinder: **Rohr, Otto, Dr., Kilbertweg 19, CH-4106 Therwil (CH)**
Erfinder: **Pissiotas, Georg, Dr., Breslauerstrasse 8, D-7850 Lörrach (DE)**

**EP 0 034 120 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Phenoxy-phenoxy-carbonsäurederivate

Die vorliegende Erfindung betrifft neue Phenoxy-phenoxy-carbonsäurederivate mit herbizider und den Pflanzenwuchs beeinflussender Wirkung, Verfahren zu deren Herstellung, sie als Wirkstoff enthaltende Mittel sowie deren Verwendung zur Bekämpfung oder Beeinflussung des Pflanzenwuchses.

Die neuen Phenoxy-phenoxy-carbonsäurederivate entsprechen der Formel I

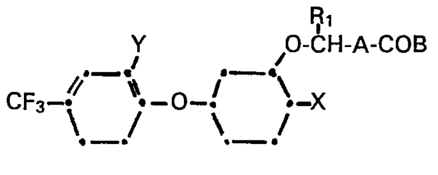

(I)

worin

A ein Brückenglied $-CH_2CH_2-$, $-CH=CH-$ oder $-COCH_2-$,

B einen Rest $-OR_2$, $-SR_2$, oder $-NR_3R_4$,

X Halogen, Nitro oder Cyan,

Y Halogen, Cyan oder Nitro,

$R_1$ Wasserstoff oder $C_1$-$C_3$ Alkyl,

$R_2$ Wasserstoff, ein Alkali- oder Erdalkalimetallion oder eine $C_1$-$C_4$ Alkylammoniumgruppe, deren Alkylreste durch Cyan, Methoxy oder Hydroxyl substituiert sein können,

-$C_1$-$C_{18}$ Alkyl, unsubstituiert oder durch Halogen, Nitro, Cyan, einen gegebenenfalls durch Halogen, Nitro, Cyan, Trifluormethyl, $C_1$-$C_4$ Alkyl-, Alkoxy- oder Alkylthiorest substituierten Phenoxyring, einen $C_3$-$C_8$ Cycloalkyl- oder Cycloalkenylrest, oder einen 5- bis 6gliedrigen heterocyclischen Ring substituiert, oder ein- oder mehrfach unterbrochen durch Sauerstoff, Schwefel, Carbonyl, Carbonyloxy, $C_1$-$C_6$ Alkylimino oder Iminogruppe-NH-,

-$C_2$-$C_8$ Alkenyl oder Alkinyl, gegebenenfalls substituiert durch Halogen,

-$C_3$-$C_8$ Cycloalkyl oder Cycloalkenyl, Phenyl oder Benzyl, unsubstituiert oder substituiert durch Halogen, Nitro, Cyan, Trifluormethyl oder einen $C_1$-$C_4$ Alkyl-, Alkoxy- oder Alkylthiorest,

$R_3$ Wasserstoff, $C_1$-$C_6$ Alkyl, gegebenenfalls substituierten Halogen, Cyan, Hydroxyl oder $C_1$-$C_4$ Alkoxy,

$C_3$-$C_6$ Alkenyl oder Alkinyl, gegebenenfalls durch Halogen substituiert,

$C_3$-$C_6$ Cycloalkyl oder Cycloalkenyl, Phenyl oder Benzyl, gegebenenfalls substituierten Halogen, Nitro, Cyan, Trifluormethyl oder einen $C_1$-$C_4$ Alkyl-, Alkoxy- oder Alkylthiorest,

$R_4$ dasselbe wie $R_3$ oder $C_1$-$C_4$ Alkoxy oder zusammen mit $R_3$ und dem Stickstoffatom, an das es gebunden ist, auch einen Pyrrolidin-, Piperidin-, Morpholin-, Thiomorpholin-, Piperazin- oder Hexamethyleniminrest bedeuten.

In diesen Bedeutungen können Alkyl-, Alkenyl- und Alkinylreste geradkettig oder verzweigt sein. Cycloalkyl und Cycloalkenylreste können mono- oder bicyclisch sein und durch Alkylreste substituiert sein. Unter Halogen wird Fluor, Brom oder Jod verstanden.

Aus den deutschen Offenlegungsschriften Nr. 2 136 828, 2 223 894, 2 433 067 und 2 531 643 sind ähnliche Phenoxy-phenoxy-alkancarbonsäurederivate bekanntgeworden. Es handelt sich dabei vor allem um Essig- und Propionsäurederivate. Diese bekannten Verbindungen besitzen eine spezielle Gräserwirkung und eignen sich zur selektiven Bekämpfung von Ungräsern in mono- und dikotylen Kulturpflanzen. Sie wirken gegen dikotyle Unkräuter nicht oder nur in hohen Aufwandmengen.

Es wurde nun überraschenderweise gefunden, dass die neuen Phenoxy-phenoxy-carbonsäurederivate der Formel I, welche den Carbonsäurerest in meta-Stellung haben, sich ausgezeichnet zur Bekämpfung von dikotylen Unkräutern in vorwiegend monokotylen Kulturen wie Getreide, (Weizen, Gerste, Sorghum), Mais, sowie von Sagittaria und Cyperus Arten in Reis sowie auch vereinzelt zur selektiven Unkrautbekämpfung in dikotylen Kulturen, wie Zukkerrüben, Soja, Baumwolle eignen.

Am wirksamsten haben sich diejenigen Verbindungen der Formel I erwiesen, in denen

A ein Brückenglied $-CH_2CH_2-$, $-CH=CH-$ oder $-COCH_2-$,

B ein $C_1$-$C_4$ Alkoxy- oder $C_1$-$C_4$ Alkylaminorest,

$R_1$ Wasserstoff oder Methyl,

X Halogen oder Nitro und

Y Halogen bedeuten.

Unter den dikotylen Unkräutern, gegen die die Verbindungen der Formel I gut wirksam sind, befinden sich: Sagittaria pygmea, Sinapis alba, Sida spinosa, Sesbania exaltata, Ipomoea purpurea, Galium asparine, Chrysanthemum leucum, Abutilon, Solanum nigrum, Ammania indica, Rotala indica, Cyperus difformis, Elatine triandra, Lindernia procumbens usw.

Die neuen Verbindungen wirken recht gut im Vorauflaufverfahren, das Nachauflaufverfahren hat sich jedoch als besonders wirkungsvoll und zweckmässig erwiesen.

Einige der neuen Wirkstoffe eignen sich auch für die Desiccation und Defoliation von Baumwoll- oder Kartoffelkulturen, kurz bevor deren Ernte.

Die Aufwandmengen an erfindungsgemässem Herbizid pro Hektar schwanken je nach Aktivität des eingesetzten Wirkstoffs, Bodenbeschaffenheit, Klima- und Witterungsbedingungen, Art und Zeitpunkt der Anwendung und Art der Kultur und der zu bekämpfenden Unkräuter zwischen 0,1 und 10,0 kg und liegen vorzugsweise zwischen 0,5 und 4 kg.

Die Verbindungen der Formel I besitzen ausserdem das Pflanzenwachstum regulierende Eigenschaften.

Die Herstellung der neuen Verbindungen der Formel I erfolgt nach an sich bekannten, für solche Synthesen geeigneten Methoden.

Die Phenoxy-phenoxy-carbonsäurederivate der Formel I werden dadurch hergestellt, dass man einen Resorcin-äther der Formel II

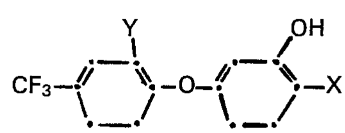

(II)

worin X und Y die unter Formel I gegebenen Bedeutungen haben, in einem inerten organischen Lösungs- oder Verdünnungsmittel, in Gegenwart der äquimolaren Menge einer Base, mit einem Halogenalkan- oder -alkencarbonsäurederivat der Formel III umsetzt,

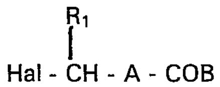

(III)

worin Hal ein Halogenatom, vorzugsweise Brom bedeutet, während A, B und $R_1$ die unter Formel I gegebene Bedeutung haben.

In einem speziellen Verfahrensgang wird der Resorcinäther der Formel II in einem inerten organischen Lösungs- und Verdünnungsmittel, in Gegenwart der äquimolaren Menge einer Base mit einem niederen Alkylester einer Bromalkencarbonsäure der Formel IV

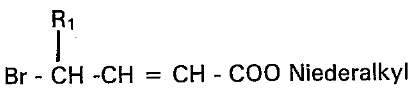

(IV)

worin $R_1$ die unter Formel I gegebene Bedeutung hat, unter Zusatz von etwas Kaliumjodid umgesetzt und gewünschtenfalls der erhaltene Alkencarbonsäureester durch Verseifen, Überführen in das Säurechlorid und Umsetzen mit einer geeigneten anorganischen Base, einem Amin oder einem geeigneten Alkanol oder Thiol in ein anderes Alkencarbonsäurederivat der Formel I umgewandelt oder gewünschtenfalls der erhaltene Alkencarbonsäureester in einem geeigneten organischen Lösungsmittel mit Raney-Nickel und Wasserstoff zum entsprechenden Alkancarbonsäureester hydriert.

Als Bromalkencarbonsäureester der Formel IV kommen für diese Umsetzung die niederen Alkylester der 4-Brom-pent-2-ensäure, 4-Brom-hex-2-ensäure, 4-Brom-hept-2-ensäure sowie die 4-Brombut-2-ensäure in Frage.

Ein Syntheseweg, der zur Herstellung der $\beta$-Ketocarbonsäurederivate der Formel I führt, in denen A die Carbonylmethylgruppe bedeutet, besteht darin, dass man ein Phenoxy-phenoxy-alkancarbonsäurederivat der Formel V

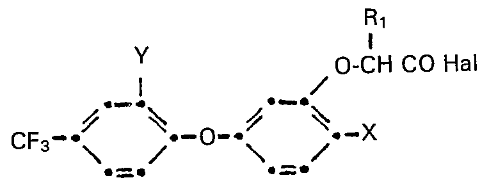

(V)

worin $R_1$, X und Y die unter Formel I gegebenen Bedeutungen haben, und Hal ein Chlor- oder Bromatom bedeutet, in einem trockenen, inerten, organischen Lösungsmittel, in Gegenwart der äquimolaren Menge einer Base mit 2,2-Dimethyl-1,3-dioxan-4,6-dion der Formel VI

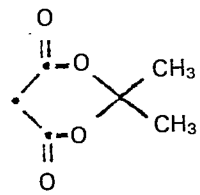

(VI)

umsetzt zur Enolverbindung VII

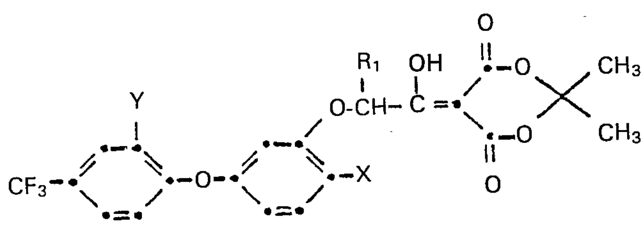

(VII)

worin $R_1$, X und X die unter Formel I gegebene Bedeutung haben und dann diese Verbindung in einem Überschuss eines Alkanols der Formel VIII

$R_2OH$ (VIII)

worin $R_2$ die unter Formel I gegebene Bedeutung hat, unter Erhitzen zum $\beta$-Oxoalkancarbonsäureester der Formel Ia umwandelt

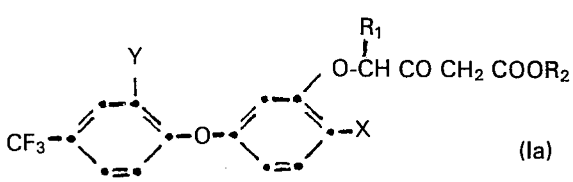

(Ia)

worin $R_1$, $R_2$, X und Y die unter Formel I gegebene Bedeutung haben.

Diese Methode der Synthese von $\beta$-Keto-carbonsäureestern ist in J. Org. Chem. *43* (1978) S. 2087/2088 beschrieben.

Schliesslich werden die Verbindungen der Formel I auch hergestellt, indem man ein Phenol der Formel IX

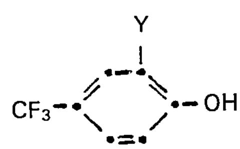

(IX)

worin Y die unter Formel I gegebene Bedeutung hat, in einem inerten, organischen Lösungs- oder Verdünnungsmittel, in Gegenwart der äquimolaren Menge einer Base mit einem 3-Halogen-phenoxy-carbonsäurederivat der Formel X umsetzt,

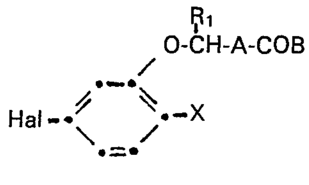

(X)

worin Hal Chlor oder Brom bedeutet und A, B, $R_1$ und X die unter Formel I gegebene Bedeutung haben.

Das Phenol der Formel IX kann auch als Salz, als Phenolat in die Reaktion eingesetzt werden, wodurch sich die Zugabe der Base erübrigt.

Die Umsetzungen der Verbindungen der Formel II und III, II und IV, V und VI, IX und X werden in Anwesenheit von gegenüber den Reaktionsteilnehmern inerten, organischen Lösungs- oder Verdünnungsmitteln durchgeführt, bevorzugt sind polare, organische Lösungsmittel, Aceton, Methyläthylketon, Dimethylformamid, Dimethylsulfoxid usw. Die Reaktionstemperaturen liegen zwischen 0° und 200°C, vorzugsweise bei 20° bis 100°C und die Reaktionsdauer beträgt je nach Ausgangsstoff, gewählter Umsetzungstemperatur und Lösungsmittel zwischen 1 Stunde und mehreren Tagen. Man arbeitet in der Regel bei Normaldruck. Als Basen (Kondensationsmittel) für die Umsetzung kommen die üblichen, wie z.B. KOH, $NaOCH_3$, $NaHCO_3$, $K_2CO_3$, Kalium-tert.-butylat usw., aber auch organische Basen wie Triäthylamin, Methylpiperidin usw. in Betracht.

Viele Ausgangsstoffe sind bekannt oder können nach üblichen Verfahren leicht hergestellt werden. Ebenso sind die Ausgangs-Phenole der Formel II bereits bekannt. Noch nicht beschriebene Phenoxyphenole der Formel III lassen sich nach üblichen Methoden und Techniken leicht herstellen, wie z.B. in DOS 2 304 066, 2 433 066 und 2 433 067 beschrieben ist.

So kann man z.B. ein Benzolderivat der Formel XIII

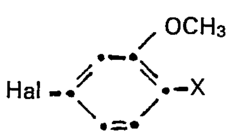

(XIII)

worin Hal Chlor oder Brom bedeutet und X die unter Formel I gegebene Bedeutung hat, in alkalischem Milieu mit einem para-Trifluoromethylphenol der Formel XI umsetzen,

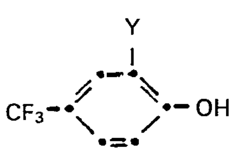

(XI)

worin Y die unter Formel I gegebene Bedeutung hat. Man erhält so einen 3-Methoxy-4'-trifluormethyl-diphenyläther, der in Position 2' durch Y und in Position 4 durch X substituiert ist. Um schliesslich daraus das entsprechende freie Ausgangsphenol der Formel II zu erhalten, wird die meta-ständige Ätherschutzgruppe ($-OCH_3$) gespalten, z.B. mittels HBr in Eisessig.

Die neuen Wirkstoffe der Formel I sind stabile Verbindungen, welche in üblichen organischen Lösungsmitteln, wie Alkoholen, Äthern, Ketonen, Dimethylformamid, Dimethylsulfoxid usw. löslich sind. Sie sind nicht explosiv und nicht ätzend. Ihre Handhabung bringt keine Probleme mit sich.

Die Herstellung anmeldungsgemässer Mittel erfolgt in an sich bekannter Weise durch inniges Vermischen und Vermahlen von Wirkstoffen der allgemeinen Formel I mit geeigneten Trägerstoffen und/oder Verteilungsmitteln, gegebenenfalls unter Zusatz von gegenüber den Wirkstoffen inerten Antischaum-, Netz-, Dispersions- und/oder Lösungsmitteln. Die Wirkstoffe können in den folgenden Aufarbeitungsformen vorliegen und angewendet werden:

Feste Aufarbeitungsformen:
- Stäubemittel, Streumittel, Granulate, Umhüllungsgranulate, Imprägnierungsgranulate und Homogengranulate;

in Wasser dispergierbare Wirkstoffkonzentrate:
- Spritzpulver (wettable powder), Paste, Emulsionen, Emulsionskonzentrate;

flüssige Aufarbeitungsformen:
- Lösungen.

Die Wirkstoffkonzentrationen betragen in den erfindungsgemässen Mitteln 1 bis 80 Gewichtsprozent und können gegebenenfalls bei der Anwendung auch in geringen Konzentrationen wie etwa 0,05 bis 1% vorliegen.

In den nachfolgenden Beispielen wird die Herstellung einiger 4-(Phenoxy-phenoxy)carbonsäurederivate der Formel I veranschaulicht. Weitere in entsprechender Weise hergestellte Wirkstoffe sind in der anschliessenden Tabelle aufgeführt. Temperaturen sind in Celsius-Graden angegeben, Druckangaben in Millibar (mbar). Teile und Prozentangaben beziehen sich auf das Gewicht. In weiteren Beispielen wird die Aufarbeitung der Wirkstoffe zu technisch anwendbaren Verabreichungsformen und die herbizide und pflanzenwuchs-regulatorische Wirkung der neuen Verbindungen gezeigt.

*Beispiel 1*

4-[3'-(2''-Chlor-4''-trifluormethylphenoxy)-6'-chlorphenoxy]-pent-2-ensäure-äthylester

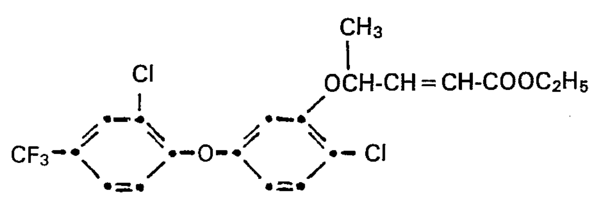

22,6 g 2-Chlor-4-trifluormethyl-3'-hydroxy-4'-chlor-diphenyläther werden mit 11,6 g Kaliumcarbonat und 11,6 g Kaliumjodid in 100 ml Acetonitril vorgelegt und 1/2 Stunde unter Rühren gekocht. Nach Zugabe von 14,5 g 1-Äthoxycarbonyl-3-brom-but-1-en wird die Suspension weitere 3 1/2 Stunden am Rückfluss gekocht und dann zur Trockne eingeengt. Der Rückstand wird in Toluol aufgenommen und dreimal mit Wasser gewaschen. Die organische

Phase wird getrocknet und eingeengt. Man erhält so 29,9 g des oben erwähnten Produkts mit einem Brechungsindex von $n_D^{30}$ = 1.5311.

*Beispiel 2*

4-[3'-(2''-Chlor-4''-trifluormethylphenoxy)-6'-chlorphenoxy]-valeriansäure-äthylester

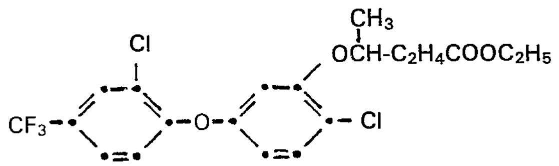

21,9 g des im Beispiel 1 erhaltenen Esters werden in 200 ml Dioxan in Gegenwart von 4 g Raney-Nickel bei Normaldruck hydriert. Nach dem Filtrieren wird das Lösungsmittel abgedampft und der Rückstand am Hochvakuum im Kugelrohr bei 230° und 0,1 mbar destilliert. Man erhält 18 g Titelprodukt mit Brechungsindex $n_D^{20}$ = 1.5249.

*Beispiel 3*

4-[3'-(2''-Chlor-4''-trifluormethylphenoxy)-6'-chlorphenoxy]-3-oxovaleriansäure-methylester

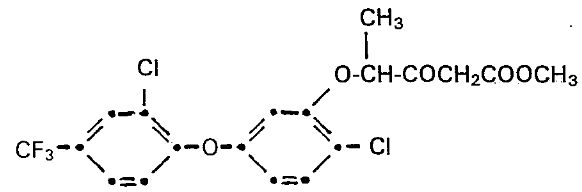

3,6 g 2,2-Dimethyl-1,3-dioxan-4,6-dion und 4,1 g Pyridin werden in 800 ml Methylendichlorid bei 0° vorgelegt. Dazu tropft man innert 1/2 Stunde bei 0-5° 8,7 g 2-[3'-(2''-Chlor-4''-trifluormethylphenoxy)-6'-chlorphenoxy]-propionsäurechlorid, gelöst in 20 ml Methyldichlorid. Die Suspension wird 1 Stunde bei 0° und eine weitere Stunde bei 20° gerührt, dann bei 0° mit Wasser gewaschen, getrocknet und am Vakuum zur Trockne eingeengt. Der Rückstand wird in 150 ml Methanol 2 Stunden am Rückfluss gekocht, eingeengt, in Toluol aufgenommen und über 200 g Kieselgel chromatographiert. Man erhält 4,8 g blassgelbes Öl mit der oben erwähnten Struktur und einer Brechung von $n_D^{20}$ = 1.5325.

In analoger Weise zu diesen Beispielen werden folgende Verbindungen hergestellt:

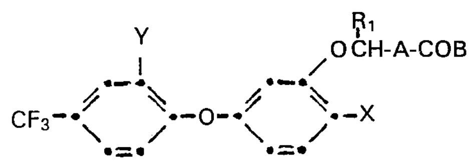

| Nr. | Y | X | $R_1$ | A | B | phys. | Daten |
|---|---|---|---|---|---|---|---|
| 1 | Cl | Cl | $CH_3$ | CH=CH | $OC_2H_5$ | $n_D^{30}$ | 1.5311 |
| 2 | Cl | Cl | $CH_3$ | $C_2H_4$ | $OC_2H_5$ | $n_D^{20}$ | 1.5249 |
| 3 | Cl | Cl | $CH_3$ | $COCH_2$ | $OCH_3$ | $n_D^{20}$ | 1.5325 |
| 4 | Cl | Cl | $CH_3$ | CH=CH | $OCH_3$ | | |
| 5 | Cl | Cl | $CH_3$ | $C_2H_4$ | $OCH_3$ | $n_D^{20}$ | 1.5314 |
| 6 | Cl | Cl | $CH_3$ | $C_2H_4$ | OH | $n_D^{20}$ | 1.5402 |
| 7 | Cl | Cl | $CH_3$ | $C_2H_4$ | $NHC_2H_5$ | Smp. 95-97° | |
| 8 | Cl | Cl | $CH_3$ | $COCH_2$ | $SCH_3$ | | |
| 9 | Cl | CN | $CH_3$ | CH=CH | $OC_2H_5$ | | |
| 10 | Cl | CN | $CH_3$ | $COCH_2$ | $OCH_3$ | | |
| 11 | Cl | Cl | H | $C_2H_4$ | $OCH_3$ | | |
| 12 | Cl | Cl | H | $COCH_2$ | $OC_2H_5$ | | |
| 13 | Cl | Cl | $C_3H_7n$ | CH=CH | $OC_2H_5$ | | |
| 14 | Cl | Cl | $C_3H_7n$ | $CH_2CH_2$ | $OC_2H_5$ | | |
| 15 | Br | Cl | $CH_3$ | CH=CH | $OC_2H_5$ | $n_D^{20}$ | 1.5423 |
| 16 | Br | Cl | $CH_3$ | $CH_2CH_2$ | $OC_2H_5$ | $n_D^{20}$ | 1.5211 |
| 17 | Cl | $NO_2$ | $CH_3$ | CH=CH | $OC_2H_5$ | $n_D^{23}$ | 1.5386 |
| 18 | Cl | Br | $CH_3$ | CH=CH | $OC_2H_5$ | | |
| 19 | Cl | $NO_2$ | $CH_3$ | $CH_2CH_2$ | $OC_2H_5$ | | |

*Beispiel 4*

Die Aufarbeitung der Wirkstoff-Verbindungen der Formel I zu für die Landwirtschaft brauchbaren Anwendungsformen kann beispielsweise gemäss einer der folgenden Vorschriften erfolgen:

*Granulat*

Zur Herstellung eines 5%igen Granulats werden die folgenden Stoffe verwendet:

| | |
|---|---|
| 5 Teile | 4-[3'-(2''-Chlor-4''-trifluormethylphenoxy)-)-6'-chlorphenoxy]-valeriansäure-äthylester, |
| 0,25 Teile | Epichlorhydrin, |
| 0,25 Teile | Cetylpolyglykoläther, |
| 3,50 Teile | Polyäthylenglykol, |
| 91 Teile | Kaolin (Korngrösse: 0,3-0,8 mm). |

Die Aktivsubstanz wird mit Epichlorhydrin vermischt und in 6 Teilen Aceton gelöst, hierauf wird Polyäthylenglykol und Cetylpolyglykoläther zugesetzt. Die so erhaltene Lösung wird auf Kaolin aufgesprüht und anschliessend im Vakuum verdampft.

*Spritzpulver*

Zur Herstellung eines a) 70%igen und b) 10%igen Spritzpulvers werden folgende Bestandteile verwendet:

a) 70 Teile 4-[3'-(2''-Chlor-4''-trifluormethylphenoxy)-6'-chlorphenoxy]-valeriansäure-äthylester,
5 Teile Natriumdibutylnaphthylsulfat,
3 Teile Naphthalinsulfonsäure-Phenolsulfonsäuren-Formaldehyd-Kondensat 3 : 2 : 1,
10 Teile Kaolin,
12 Teile Champagne-Kreide;

b) 10 Teile des obigen Wirkstoffs,
3 Teile Gemisch der Natriumsalze von gesättigten Fettalkoholsulfaten,
5 Teile Naphthalinsulfonsäure-Formaldehyd-Kondensat,
82 Teile Kaolin.

Der angegebene Wirkstoff wird auf die entsprechenden Trägerstoffe (Kaolin und Kreide) aufgezogen und anschliessend mit den übrigen Bestandteilen vermischt und vermahlen. Man erhält Spritzpulver von vorzüglicher Benetzbarkeit und Schwebefähigkeit. Aus solchen Spritzpulvern können durch Verdünnen mit Wasser Suspensionen von 0,1-80% Wirkstoff erhalten werden, die sich zur Unkrautbekämpfung in Pflanzenkulturen eignen.

*Paste*

Zur Herstellung einer 45%igen Paste werden folgende Stoffe verwendet:

45 Teile 4-[3'-(2''-Chlor-4''-trifluormethylphenoxy)--6'-chlorphenoxy]-valeriansäure-äthylester,
5 Teile Natriumaluminiumsilikat,
14 Teile Cetylpolyglykoläther mit 8 Mol Äthylenoxid,
1 Teil Oleylpolyglykoläther mit 5 Mol Äthylenoxid,
2 Teile Spindelöl,
10 Teile Polyäthylenglykol,
23 Teile Wasser.

Der Wirkstoff wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

*Emulsionskonzentrat*

Zur Herstellung eines 25%igen Emulsionskonzentrats werden

25 Teile 4-[3'-(2''-Chlor-4''-trifluormethylphenoxy)-6'-chlorphenoxy]-valeriansäure-äthylester,
5 Teile einer Mischung von Nonylphenolpolyoxyäthylen und Calciumdodecylbenzolsulfat,
15 Teile Cyclohexanon,
55 Teile Xylol

miteinander vermischt. Dieses Konzentrat kann mit Wasser zu Emulsionen auf geeignete Konzentrationen von z.B. 0,1 bis 10% verdünnt werden. Solche Emulsionen eignen sich zur Bekämpfung von Unkräutern in Kulturpflanzungen.

Diesen Anwendungsformen können beispielsweise neben den Verbindungen der Formel I Insektizide, Fungizide, Bakterizide, Fungistatika, Bakteriostatika, Nematozide oder weitere Herbizide zur Verbreiterung des Wirkungsspektrums zugegeben werden.

*Beispiel 5*

Die herbizide und den Pflanzenwuchs regulierende Wirkung wurde durch folgende Versuche ermittelt:

*Herbizide Wirkung bei Applikation der Wirkstoffe vor dem Auflaufen der Pflanzen (pre-emergent)*

Im Gewächshaus werden Pflanzensamen in Blumentöpfe von ca. 11 cm Durchmesser gesät. Unmittelbar nach der Aussaat wird dann die Erdoberfläche mit einer wässrigen Emulsion der Wirkstoffe, welche durch Verdünnen des Emulsionskonzentrats erhaltenwird, so behandelt, dass eine Menge Wirkstoff von 2 resp. 4 kg pro Hektar gespritzt wird. Die Töpfe werden dann im Gewächshaus unter optimalen Bedingungen für das Pflanzenwachstum, regelmässiges Bewässern, einer Temperatur von 22-25°C und 50-70% relativer Luftfeuchtigkeit gehalten. Der Versuch wird nach 3 Wochen abgebrochen und der Zustand der Pflanzen gemäss dem folgenden EWRC (European Weed Research Councel) Bewertungsschema registriert:

1 Pflanze abgestorben
2-4 schwere Schädigung
5, 6 mittlere Schäden
7, 8 leichte Schäden
9 Pflanze gedeiht normal, wie unbehandelte Kontrollpflanze.

Die Resultate dieses Versuchs sind in der untenstehenden Tabelle zusammengefasst.

| Verbindung Nr. | 2 | | 3 | | 6 | | 7 | | 15 | | 16 | |
|---|---|---|---|---|---|---|---|---|---|---|---|---|
| Aufwandmenge kg/ha | 4 | 2 | 4 | 2 | 4 | 2 | 4 | 2 | 4 | 2 | 4 | 2 |
| Pflanze | | | | | | | | | | | | |
| Weizen | 9 | 9 | 9 | 9 | 9 | 9 | 9 | 9 | 9 | 9 | 9 | 9 |
| Reis | 9 | 9 | 6 | 7 | 8 | 8 | 8 | 8 | 9 | 9 | 9 | 9 |
| abutilon sp. | 1 | 5 | 6 | 6 | 1 | 2 | 1 | 1 | 2 | 6 | 1 | 5 |
| sinapis alba | 1 | 1 | 1 | 2 | 1 | 1 | 1 | 1 | 1 | 4 | 1 | 1 |
| amarantus retrofl. | 1 | 1 | 1 | 1 | 1 | 1 | 1 | 1 | 1 | 1 | 1 | 2 |
| chenopodium sp. | 1 | 2 | 1 | 1 | 1 | 1 | 1 | 1 | 1 | 1 | 1 | 1 |
| viola tricolor | 1 | 2 | 1 | 3 | 1 | 1 | 1 | 2 | 1 | 2 | 1 | 2 |
| beta vulgaris | 1 | 3 | 1 | 1 | 1 | 1 | 1 | 1 | 2 | 2 | 1 | 1 |
| chrysanthemum l. | 1 | 1 | 1 | 1 | 1 | 2 | 1 | 2 | 1 | 2 | 1 | 1 |

*Herbizide Wirkung bei Applikation der Wirkstoffe nach dem Auflaufen der Pflanzen (post-emergent)*

Verschiedene Kulturpflanzen und Unkräuter werden aus den Samen in Töpfen im Gewächshaus aufgezogen, bis sie das 4- bis 6-Blatt-Stadium erreicht haben. Dann werden die Pflanzen mit wässrigen Wirkstoffemulsionen (erhalten aus dem 25%igen emulgierbaren Konzentrat) in Dosierungen von 1 und 1/2 kg pro Hektar gespritzt. Die Pflanzen werden dann bei optimalen Bedingungen von Licht, Begiessung, Temperatur (22-25°C) und Luftfeuchtigkeit (50-70% relativ) gehalten. 15 Tage nach Behandlung erfolgte die Auswertung des Versuchs. Die Resultate sind unten zusammengefasst.

| Verbindung Nr. | 1 | | 2 | | 3 | | 5 | | 6 | | 7 | | 15 | | 16 | |
|---|---|---|---|---|---|---|---|---|---|---|---|---|---|---|---|---|
| Aufwandmenge | 1 | 1/2 | 1 | 1/2 | 1 | 1/2 | 1 | 1/2 | 1 | 1/2 | 1 | 1/2 | 1 | 1/2 | 1 | 1/2 |
| Pflanze | | | | | | | | | | | | | | | | |
| Weizen | 9 | 9 | 8 | 9 | 8 | 9 | 9 | 9 | 9 | 9 | 6 | 8 | 9 | 9 | 8 | 9 |
| Reis | 9 | 9 | 8 | 9 | 9 | 9 | 9 | 9 | 8 | 9 | 6 | 7 | 9 | 9 | 8 | 9 |
| abutilon sp. | 1 | 2 | 1 | 1 | 2 | 2 | 3 | 3 | 2 | 2 | 1 | 1 | 1 | 1 | 1 | 1 |
| sinapis alba | 1 | 1 | 1 | 1 | 1 | 1 | 2 | 2 | 1 | 1 | 1 | 1 | 1 | 1 | 1 | 1 |
| amarantus r. | 2 | 3 | 1 | 1 | 1 | 1 | 1 | 2 | 1 | 2 | 1 | 1 | 1 | 1 | 1 | 2 |
| chenopodium sp. | 1 | 2 | 1 | 2 | 2 | 2 | 2 | 2 | 2 | 2 | 1 | 1 | 1 | 1 | 1 | 1 |
| viola tricolor | 2 | 2 | 1 | 2 | 2 | 2 | 3 | 4 | 1 | 1 | 1 | 1 | 1 | 1 | 1 | 1 |
| chrysanthemum l. | 1 | 1 | 1 | 1 | 1 | 1 | 1 | 2 | 1 | 2 | 1 | 1 | 1 | 1 | 1 | 1 |
| galium aparine | 3 | 3 | 1 | 1 | 5 | 5 | 3 | 3 | 1 | 1 | 1 | 2 | 2 | 2 | 1 | 1 |
| ipomoea purp. | 1 | 1 | 1 | 1 | 1 | 1 | 2 | 2 | 1 | 1 | 1 | 1 | 1 | 1 | 1 | 1 |

In beiden Versuchen wurden die monokotylen Kulturpflanzen Weizen und Reis geschont, während die dikotylen Pflanzen (Unkräuter) stark geschädigt wurden.

*Desiccations- und Defoliationswirkung*

Im Gewächshaus wurden Baumwollpflanzen der Sorte Deltapine in Tontöpfen angezogen. Nach abgeschlossener Kapselbildung wurden sie mit wässrigen Zubereitungen der Wirkstoffe in einer Aufwandmenge, die 1,2, 0,6 und 0,3 kg/ha im Feld entspräche, gespritzt. Unbehandelte Pflanzen wurden als Kontrolle belassen. Die Auswertung des Versuchs erfolgte 3, 7 und 14 Tage nach Applikation der Versuchssubstanz durch Bestimmen des Grades an Defoliation (% abgefallene Blätter) und an Desiccation (% Austrocknung der an der Pflanze verbleibenden Blätter).

Die Verbindungen 3, 7 und 16 liessen bei einer Aufwandmenge von 0,6 kg/ha nach 14 Tagen bloss noch einige vertrocknete Blätter auf der Pflanze (90% Wirkung).

*Selektive herbizide Wirkung auf Reis im Nachauflaufverfahren*

Reispflänzchen, welche 25 Tage als sind, wurden im Gewächshaus in grosse rechteckige Eternitschalen verpflanzt. Zwischen die Reihen der Reispflanzen wurden dann Samen der in Reiskulturen vorkommenden Unkräuter Echinochloa crus galli, Cyperus difformis, Ammania und Rotala gesät. Die Schalen wurden gut bewässert und bei einer Temperatur von ca. 25°C und hoher Luftfeuchtigkeit gehalten. Nach 12 Tagen, wenn die Unkräuter aufgelaufensind und das 2-3 Blattstadium erreicht haben, wurde die Erde in der Schale mit einer 2,5 cm hohen Schicht Wasser bedeckt. Die Verbindung Nr. 2 wurde dann als Emulsionskonzentrat mittels einer Pipette zwischen die Pflanzenreihen appliziert, wobei man das Emulsionskonzentrat so verdünnte und auftrug, dass es einer Applikationsmenge im Feld von 2 und 1 kg Wirkstoff pro Hektar entsprach. Der Versuch wurde nach 4 Wochen ausgewertet. Die Resultate waren wie folgt:

| | Reis | | Echinochloa crus galli | | Cyperus difformis | | Ammania indica | | Rotala indica | | |
|---|---|---|---|---|---|---|---|---|---|---|---|
| Aufwand-menge | 2 | 1 | 2 | 1 | 2 | 1 | 2 | 1 | 2 | 1 | kg/ha |
| | 7 | 7 | 3 | 4 | 3 | 5 | 1 | 3 | 3 | 4 | |

**Patentansprüche**

1. Phenoxy-phenoxy-carbonsäurederivate der Formel I

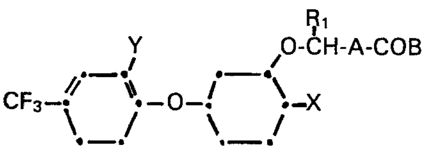
(I)

worin

A ein Brückenglied $-CH_2-CH_2-$, $-CH=CH-$ oder $-COCH_2$,

B einen Rest $-OR_2$, $-SR_2$ oder $-NR_3R_4$,

X Halogen, Nitro oder Cyan,

Y Halogen, Cyan oder Nitro,

$R_1$ Wasserstoff oder $C_1$-$C_3$ Alkyl,

$R_2$ Wasserstoff, ein Alkali- oder Erdalkalimetallion oder einen $C_1$-$C_4$ Alkylammoniumrest, dessen Alkylreste durch Cyan, Methoxy oder Hydroxyl substituiert sein können,

-$C_1$-$C_{18}$ Alkyl, unsubstituiert oder durch Halogen, Nitro, Cyan, einen gegebenenfalls durch Halogen, Nitro, Cyan, Trifluormethyl, $C_1$-$C_4$ Alkyl-, Alkoxy- oder Alkylthiorest substituierten Phenoxyring, einen $C_3$-$C_8$ Cycloalkyl- oder Cycloalkenylrest, oder einen 5- bis 6gliedrigen heterocyclischen Ring oder es ist ein- oder mehrfach unterbrochen durch Sauerstoff, Schwefel, Carbonyl, Carbonyloxy, $C_1$-$C_6$ Alkylimino oder die Iminogruppe -NH-,

-$C_2$-$C_8$ Alkenyl oder Alkinyl, gegebenenfalls substituiert durch Halogen,

-$C_3$-$C_8$ Cycloalkyl oder Cycloalkenyl, Phenyl oder Benzyl, unsubstituiert oder substituiert durch Halogen, Nitro, Cyan, Trifluormethyl oder einen $C_1$-$C_4$ Alkyl-, Alkoxy- oder Alkylthiorest,

$R_3$ Wasserstoff, $C_1$-$C_6$ Alkyl, gegebenenfalls substituiert durch Halogen, Cyan, Hydroxyl oder $C_1$-$C_4$ Alkoxy,

$C_3$-$C_6$ Alkenyl oder Alkinyl, gegebenenfalls halogensubstituiert,

$C_3$-$C_6$ Cycloalkyl oder Cycloalkenyl, Phenyl oder Benzyl, gegebenenfalls substituiert durch Halogen, Nitro, Cyan, Trifluormethyl oder einen $C_1$-$C_4$ Alkyl-, Alkoxy- oder Alkylthiorest,

$R_4$ dasselbe wie $R_3$ oder $C_1$-$C_4$ Alkoxy oder zusammen mit $R_3$ und dem Stickstoffatom, an das es gebunden ist, auch einen Pyrrolidin-, Piperidin-, Morpholin-, Thiomorpholin-, Piperazin- oder Hexamethyleniminrest bedeuten.

2. Die Verbindungen gemäss Anspruch 1 der Formel I, in denen

A ein Brückenglied $-CH_2CH_2-$, $-CH=CH-$ oder $-COCH_2$,

B einen $C_1$-$C_4$ Alkoxy- oder $C_1$-$C_4$ Alkylaminorest,

$R_1$ Wasserstoff oder Methyl,

X Halogen oder Nitro und

Y Halogen bedeuten.

3. 4-[3'-(2''-Chlor-4''-trifluormethylphenoxy)-6'-chlorphenoxy]-pent-2-ensäure-äthylester, gemäss Anspruch 1.

4. 4-[3'-(2''-Chlor-4''-trifluormethylphenoxy)-6'-chlorphenoxy]-valeriansäure-äthylester, gemäss Anspruch 1.

5. 4-[3'-(2''-Chlor-4''-trifluormethylphenoxy)-6'-chlorphenoxy]-3-oxovaleriansäure-methylester, gemäss Anspruch 1.

6. Verfahren zur Herstellung der neuen Phenoxy-phenoxy-carbonsäurederivate der Formel I, Anspruch 1, dadurch gekennzeichnet, dass man einen Resorcin-äther der Formel II

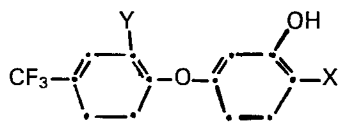
(II)

worin X und Y die unter Formel I, Anspruch 1, gegebenen Bedeutungen haben, in einem inerten organischen Lösungs- oder Verdünnungsmittel, in Gegenwart der äquimolaren Menge einer Base, mit einem Halogenalkan- oder Halogenalkencarbonsäurederivat der Formel III umsetzt,

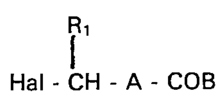
(III)

worin Hal ein Halogenatom bedeutet, während A, B und $R_1$ die unter Formel I, Anspruch 1, gegebene Bedeutung haben.

7. Verfahren zur Herstellung der Verbindungen der Formel I, Anspruch 1, dadurch gekennzeichnet, dass man ein Phenol der Formel IX

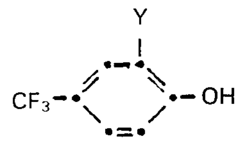
(IX)

worin Y die unter Formel I, Anspruch 1, gegebene Bedeutung hat, in einem inerten, organischen Lösungs- oder Verdünnungsmittel, in Gegenwart der äquimolaren Menge einer Base mit einem 3-Halogen-phenoxy-carbonsäurederivat der Formel X umsetzt,

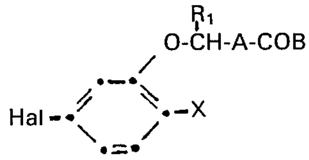

(X)

worin Hal Chlor oder Brom bedeutet und A, B, $R_1$ und X die unter Formel I, Anspruch 1, gegebene Bedeutung haben.

8. Verfahren zur Herstellung der $\beta$-Oxo-alkancarbonsäurederivate der Formel Ia

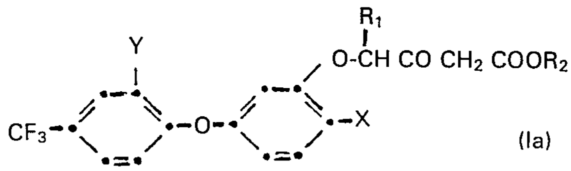

(Ia)

worin $R_1$, $R_2$, X und Y die unter Formel I, Anspruch 1, gegebene Bedeutung haben, dadurch gekennzeichnet, dass man ein Phenoxy-phenoxy-alkancarbonsäurederivat der Formel V

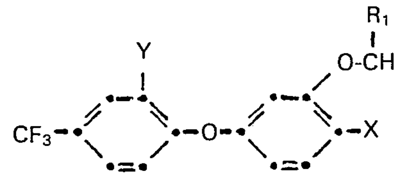

(V)

worin Hal Chlor oder Brom bedeutet und $R_1$, X und Y die unter Formel I, Anspruch 1, gegebene Bedeutung haben, in einem trockenen, inerten, organischen Lösungsmittel, in Gegenwart der äquimolaren Menge einer Base mit 2,2-Dimethyl-1,3-dioxan-4,6-dion der Formel VI

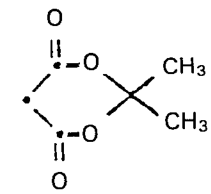

(VI)

umsetzt zur Enolverbindung VII

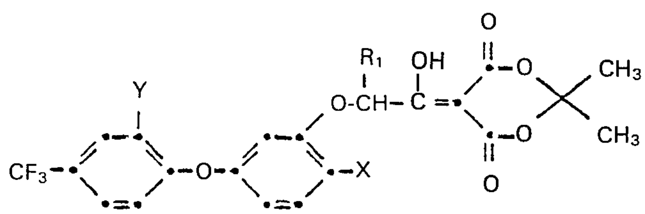

(VII)

worin $R_1$, X und Y die unter Formel I, Anspruch 1, gegebene Bedeutung haben und dann diese Verbindung in einem Überschuss eines Alkanols der Formel VIII

$R_2OH$ (VIII)

worin $R_2$ die unter Formel I, Anspruch 1, gegebene Bedeutung hat, unter Erhitzen zum $\beta$-Oxo-alkancarbonsäureester der Formel Ia umwandelt.

9. Herbizides Mittel, dadurch gekennzeichnet, dass es als Wirkstoff mindestens ein Phenoxy-phenoxy-carbonsäurederivat der Formel I, Anspruch 1, enthält.

10. Die Verwendung der Verbindungen der Formel I, Anspruch 1, oder sie enthaltender Mittel zur Bekämpfung von Unkräutern in Nutzpflanzenkulturen.

11. Die Verwendung der Verbindungen der Formel I, Anspruch 1, oder sie enthaltender Mittel zur Bekämpfung von Unkräutern In Kulturen von Getreide und Reis.

12. Die Verwendung der Verbindungen der Formel I, Anspruch 1, oder sie enthaltender Mittel zur Desiccation und Defoliation von Baumwoll- und Kartoffelkulturen, kurz bevor deren Ernte.

**Claims**

1. A phenoxyphenoxycarboxylic acid derivative of the formula I

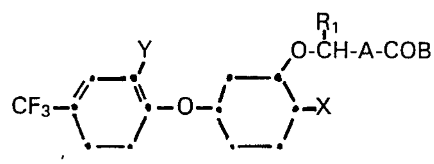

(I)

wherein

A is a bridge member $-CH_2CH_2-$, $-CH=CH-$ or $-COCH_2$,

B is a radical $-OR_2$, $-SR_2$ or $-NR_3R_4$,

X is halogen, nitro or cyano,

Y is halogen, cyano or nitro,

$R_1$ is hydrogen or $C_1$-$C_3$alkyl,

$R_2$ is hydrogen, an alkali metal ion or an alkaline earth metyl ion or a $C_1$-$C_4$alkylammonium group, the alkyl moieties of which can be substituted by cyano, methoxy or hydroxyl; or is $C_1$-$C_{18}$alkyl which is unsubstituted or substituted by halogen, nitro, cyano, a phenoxy ring which is unsubstituted or substituted by halogen, nitro, cyano, trifluoromethyl, $C_1$-$C_4$alkyl, $C_1$-$C_4$alkoxy or $C_1$-$C_4$alkylthio; or by a $C_3$-$C_8$cycloalkyl or $C_3$-$C_8$cycloalkenyl radical, or by a 5- to 6-membered heterocyclic ring, or is interrupted once or more than once by oxygen, sulfur, carbonyl, carbonyloxy, $C_1$-$C_4$alkylamino or the imino group -NH-; or is $C_2$-$C_8$alkenyl or $C_2$-$C_8$alkynyl, each of which is unsubstituted or substituted by halogen; or is $C_3$-$C_8$cycloalkyl or $C_3$-$C_8$cycloalkenyl; or is phenyl or benzyl, each of which is unsubstituted or substituted by halogen, nitro, cyano, trifluoromethyl or a $C_1$-$C_4$alkyl, $C_1$-$C_4$alkoxy or $C_1$-$C_4$alkylthio radical,

$R_3$ is hydrogen, $C_1$-$C_6$alkyl which is unsubstituted or substituted by halogen, cyano, hydroxyl or $C_1$-$C_4$-alkoxy; or is $C_3$-$C_6$alkenyl or $C_3$-$C_6$alkynyl, each of which is unsubstituted or substituted by halogen; or is $C_3$-$C_6$cycloalkyl or $C_3$-$C_6$cycloalkenyl, or phenyl or benzyl, each of which is unsubstituted or substituted by halogen, nitro, cyano, trifluoromethyl or $C_1$-$C_4$alkyl, $C_1$-$C_4$alkoxy or $C_1$-$C_4$alkylthio,

$R_4$ has the same meaning as $R_3$ or is $C_1$-$C_4$alkoxy, or

$R_3$ and $R_4$, together with the nitrogen atom to which they are attached, are also a pyrrolidine, piperidine, morpholine, thiomorpholine, piperazine or hexamethyleneimine radical.

2. A compound according to claim 1 of the formula I, wherein A is a bridge member $-CH_2CH_2-$, $CH=CH-$ or $-COCH_2-$, B is a $C_1$-$C_4$alkoxy or $C_1$-$C_4$alkylamino radical, $R_1$ is hydrogen or methyl, X is halogen or nitro, and Y is halogen.

3. 4-[3'-(2''-Chloro-4''-trifluoromethylphenoxy)-6'-chlorophenoxy]-pent-2-enoic acid ethyl ester according to claim 1.

4. 4-[3'-(2''-Chloro-4''-trifluoromethylphenoxy)-6'-chlorophenoxy]-valeric acid ethyl ester according to claim 1.

5. 4-[3'-(2''-Chloro-4''-trifluoromethylphenoxy)-6'-chlorophenoxy]-oxovalerianic acid methyl ester according to claim 1.

6. A process for the production of a phenoxyphenoxycarboxylic acid derivative of the formula I according to claim 1, which process comprises reacting a resorcinol ether of the formula II

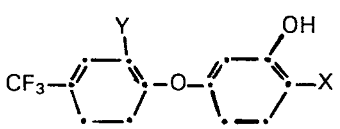

(II)

wherein X and Y are as defined for formula I in claim 1, with a haloalkane- or haloalkenecarboxylic acid derivative of the formula III

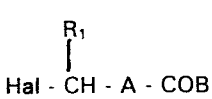

(III)

wherein Hal is a halogen atom and A, B and $R_1$ are as defined for formula I in claim 1, an inert organic solvent or diluent and in the presence of an equimolar amount of a base.

7. A process for the production of a compound of the formula I according to claim 1, which process comprises reacting a phenol of the formula IX

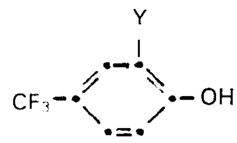

(IX)

wherein Y is as defined for formula I in claim 1, with a 3-halophenoxyphenoxycarboxylic acid derivative of the formula X

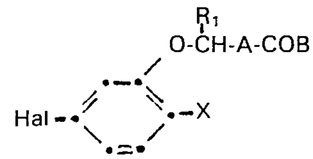

(X)

wherein Hal is chlorine or bromine and A, B, $R_1$ and X are as defined for formula I in claim 1, in an inert organic solvent or diluent and in the presence of an equimolar amount of a base.

8. A process for the production of a $\beta$-oxoalkanecarboxylic acid derivative of the formula Ia,

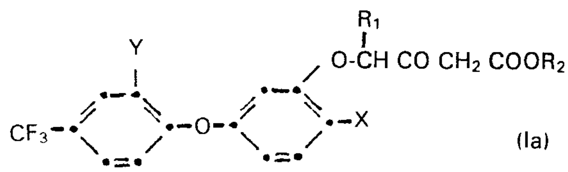

(Ia)

wherein $R_1$, $R_2$, X and Y are as defined for formula I in claim 1, which process comprises reacting a phenoxyphenoxyalkanecarboxylic acid derivative of the formula V

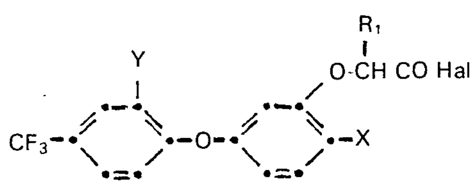

(V)

wherein Hal is chlorine or bromine and $R_1$, X and Y are as defined for formula I in claim 1, with 2,2-dimethyl-1,3-dioxane-4,6-dione of the formula

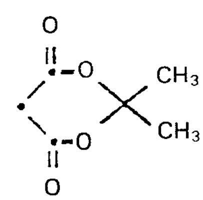

(VI)

in a dry inert organic solvent and in the presence of an equimolar amount of a base, to give the enol of the formula VII

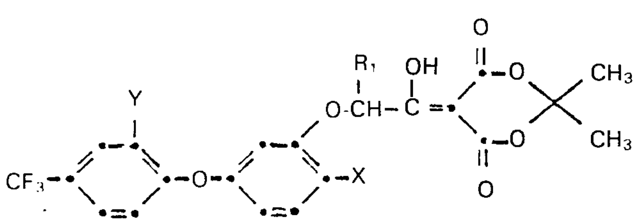

(VII)

wherein $R_1$, X and Y are as defined for formula I in claim 1, and then converting this compound, in an excess of an alkanol of the formula VIII

$R_2OH$ (VIII)

wherein $R_2$ is as defined for formula I in claim 1, with heating, to the $\beta$-oxoalkanecarboxylic acid ester of the formula Ia.

9. A herbicidal composition which contains, as active component, at least one phenoxyphenoxycarboxylic acid derivative of the formula I according to claim 1.

10. A method of controlling weeds in crops of useful plants, which comprises applying thereto a herbicidally effective amount of a compound of the formula I according to claim 1 or of a composition containing such a compound.

11. A method of controlling weeds in crops of cereals and rice, which comprises applying thereto a herbicidally effective amount of a compound of the formula I according to claim 1 or of a composition containing such a compound.

12. A method of desiccating and defoliating cotton and potato plants shortly before harvesting, which comprises applying thereto a herbicidally effective amount of a compound of the formula I according to claim 1 or of a composition containing such a compound.

**Revendications**

1. Dérivés d'acide phénoxy-phénoxy-carboxylique de formule I

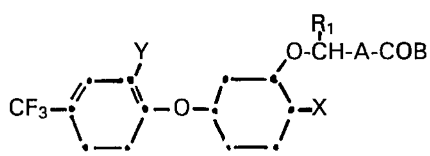

(I)

où

A représente un élément de pont $-CH_2-CH_2-$, $-CH=CH-$ ou $-COCH_2-$,

B représente un radical $-OR_2$, $-SR_2$ ou $-NR_3R_4$,

X représente un halogène, un nitro ou un cyano,

Y représente un halogène, un cyano ou un nitro,

$R_1$ représente un hydrogène ou un alcoyle en $C_1$ à $C_3$,

$R_2$ représente un hydrogène, un ion de métal alcalin ou alcalinoterreux ou un radical alcoyle en $C_1$ à $C_4$-ammonium, dont les radicaux alcoyle peuvent être substitués par un cyano, un méthoxy ou un hydroxyle, un alcoyle en $C_1$ à $C_{18}$, non substitué ou substitué par un halogène, un nitro, un cyano, un noyau phénoxy éventuellement substitué par un halogène, un nitro, un cyano, un trifluorométhyle, un radical alcoyle, alcoxy ou alcoylthio en $C_1$ à $C_4$, un radical cycloalcoyle ou cycloalcényle en $C_3$ à $C_8$, par un noyau hétérocyclique à 5 à 6 chaînons ou interrompu une ou plusieurs fois par un oxygène, un soufre, un carbonyle, un carbonyloxy, un alcoyle en $C_1$ à $C_6$-amino ou le groupe imino -NH-, un alcényle ou un alcynyle en $C_2$ à $C_8$, éventuellement substitué par un halogène, un cycloalcoyle ou un cycloalcényle en $C_3$ à $C_8$, un phényle ou un benzyle, non substitué ou substitué par un halogène, un nitro, un cyano, un trifluorométhyle ou un radical alcoyle, alcoxy ou alcoylthio e $C_1$ à $C_4$,

$R_3$ représente un hydrogène, un alcoyle en $C_1$ à $C_6$, éventuellement substitué par un halogène, un cyano, un hydroxyle ou un alcoxy en $C_1$ à $C_4$, un alcényle ou un alcynyle en $C_3$ à $C_6$, éventuellement halogéno-substitué, un cycloalcoyle ou un cycloalcényle en $C_3$ à $C_6$, un phényle ou un benzyle, éventuellement substitué par un halogène, un nitro, un cyano, un trifluorométhyle ou un radical alcoyle, alcoxy ou alcoylthio en $C_1$ à $C_4$,

$R_4$ a la même signification que $R_3$ ou encore représente un alcoxy en $C_1$ à $C_4$ ou, avec $R_3$ et l'atome d'azote auquel il est lié, un radical pyrrolidine, pipéridine, morpholine, thiomorpholine, pipérazine ou hexaméthylénimine.

2. Composés selon la revendication 1 de formule I, où

A représente un élément de pont $-CH_2CH_2-$, $-CH=CH-$ ou $-COCH_2-$,

B représente un radical alcoxy en $C_1$ à $C_4$ ou alcoylamino en $C_1$ à $C_4$,

$R_1$ représente un hydrogène ou un méthyle,

X représente un halogène ou un nitro et

Y représente un halogène.

3. Ester éthylique de l'acide 4-[3'-(2''-chloro-4''-trifluorométhylphénoxy)-6'-chlorophénoxy]-pent-2-énoïque selon la revendication 1.

4. Ester éthylique de l'acide 4-[3'-(2''-chloro-4''-trifluorométhylphénoxy)-6'-chlorophénoxy]-valérianique selon la revendication 1.

5. Ester méthylique de l'acide 4-[3'-(2''-chloro-4''-trifluorométhylphénoxy)-6'-chlorophénoxy]-3-oxovalérianique selon la revendication 1.

6. Procédé de préparation des nouveaux dérivés d'acide phénoxy-phénoxy-carboxylique de formule I de la revendication 1, caractérisé en ce qu'on fait réagir un éther de résorcine de formule II

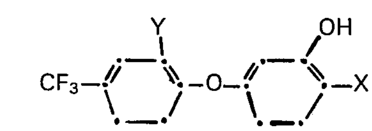

(II)

où X et Y ont les significations données pour la formule I de la revendication 1, dans un solvant ou diluant organique inerte, en présence d'une quantité équimolaire d'une base, avec un dérivé d'acide halogène-alcanoïque ou halogène-alcènecarboxylique de formule III

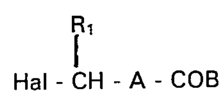

(III)

où Hal représente un atome d'halogène, tandis que A, B et $R_1$ ont la signification donnée pour la formule I de la revendication 1.

7. Procédé de préparation des composés de formule I de la revendication 1, caractérisé en ce qu'on fait réagir un phénol de formule IX

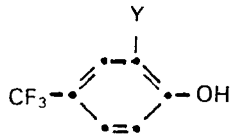

(IX)

où Y a la signification donnée pour la formule I de la revendication 1, dans un solvant ou diluant organique inerte, en présence d'une quantité équimolaire d'une base avec un dérivé d'acide 3-halogène-phénoxy-carboxylique de formule X

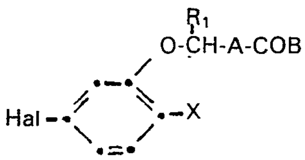

(X)

où Hal représente un chlore ou un brome et At, B, $R_1$ et X ont la signification donnée pour la formule I de la revendication 1.

8. Procédé de préparation de dérivés d'acide $\beta$-oxo-alcanecarboxylique de formule Ia

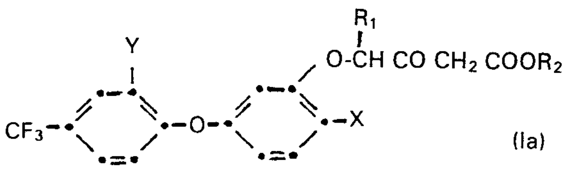

(Ia)

où $R_1$, $R_2$, X et Y ont la signification donnée pour la formule I de la revendication 1, caractérisé en ce qu'on fait réagir un dérivé d'acide phénoxy-phénoxy-alcanecarboxylique de formule V

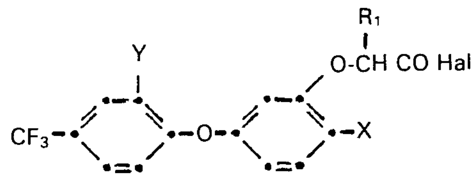

(V)

où Hal représente un chlore ou un brome et $R_1$, X et Y ont la signification donnée pour la formule I de la revendication 1, dans un solvant organique inerte sec en présence d'une quantité équimolaire d'une base, avec la 2,2-diméthyl-1,3-dioxanne-4,6-dione de formule VI

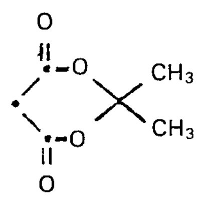

(VI)

pour donner le composé énol VII

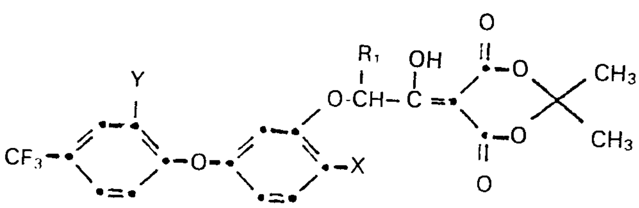

(VII)

où $R_1$, X et Y ont la signification donnée pour la formule I de la revendication 1, puis en ce qu'on transforme ce composé dans un excès d'un alcanol de formule VIII

$R_2OH$ (VIII)

où $R_2$ a la signification donnée pour la formule I de la revendication 1, en chauffant, pour donner l'ester d'acide $\beta$-oxo-alcanecarboxylique de formule Ia.

9. Agent herbicide caractérisé en ce qu'il contient comme matière active au moins un dérivé d'acide phénoxy-phénoxy-carboxylique de formule I de la revendication 1.

10. Application des composés de formule I de la revendication 1 ou des agents qui les contiennent à la lutte contre les mauvaises herbes dans les cultures de plantes utiles.

11. Application des composés de formule I de la revendication 1 ou des agents qui les contiennent à la lutte contre les mauvaises herbes dans les cultures de céréales et de riz.

12. Application des composés de formule I de la revendication 1 ou des agents qui les contiennent à la dessication et à la défoliation des cultures de coton et de pomme de terre peu avant leur récolte.